# EUROPEAN PATENT APPLICATION

(11) **EP 4 530 514 A1**
(43) Date of publication of application: **02.04.2025**
(21) Application number: 23275144.6
(22) Date of filing: 28.09.2023
(51) Int. Cl.: F16L 15/00, F16L 21/02, F16L 37/02

(54) **COUPLING ASSEMBLY AND FLUID LINE CONNECTION**

(71) Applicant: Siemens Healthcare Limited, Camberley, Surrey GU15 3YL (GB)
(72) Inventor: Walton, Philip, Witney, Oxon, OX28 5NL (GB); Chorley, Simon, Oxford, OX2 9BN (GB); Cooke, Mark, Abingdon, OX14 1SL (GB)
(74) Representative: Maier, Daniel Oliver

(57) **Abstract**

The invention relates to a coupling assembly (50) for connecting fluid lines (51), including a first part (53) comprising a sleeve (33), a second part (54) comprising an insert (31), and at least one seal (37), wherein the sleeve (33) comprises an opening (33a) configured to accommodate the insert (31), wherein the at least one seal (37) is arranged between the first part (53) and the second part (54) in such a way to provide a fluid-tight connection between the first part (53) and the second part (54) when the insert (31) is arranged in an end position within the sleeve (33), and wherein the sleeve (33) and/or the insert (31) comprise at least one vent opening (40) configured to provide a fluid path (70) from an inner volume (57) of the coupling assembly (50) to a surrounding (90) when the insert (31) is arranged within the sleeve (33) in a position between the opening (33a) of the sleeve (33) and the end position. The invention also relates to a sleeve (33) and an insert (31) for use in an inventive coupling assembly (50), and a fluid line connection (80) comprising an inventive coupling assembly (50).

## Description

Independent of the grammatical term usage, individuals with male, female or other gender identities are included within the term.

Flexible fluid lines with couplings designed for making and breaking can present a hazard to an operator when carrying fluid under pressure. If the coupling is opened whilst the fluid is under pressure, the force of the escaping fluid can cause an end of the flexible fluid line to whip and injure the operator.

Conventional couplings such as chain clamps, threaded couplings, flanged couplings, but also self-sealing couplings are expensive, bulky, require access for dedicated tools and/or reduce a flow diameter and thus prevent insulated fluid lines from being routed through the coupling. Particularly, clamped couplings can blow apart when opened under pressure.

In some applications, lanyards securing the fluid lines are used as an additional safety feature to restrain movement of the fluid lines when the coupling is opened under pressure. However, lanyards must be properly installed to secure a fluid line. Therefore, lanyards rely on a correct assembly process being followed and are not safe by design.

It is an objective of the invention to provide a coupling assembly that eliminates a risk of whipping when disconnected under pressure.

This objective is achieved by a coupling assembly, a sleeve, an insert, and a fluid line connection according to the invention. Further advantageous embodiments are specified in the dependent claims.

The inventive coupling assembly is configured for connecting fluid lines. Particularly, the coupling assembly is configured for connecting a first fluid system or a first fluid line to a second fluid system or a second fluid line.

The coupling assembly includes a first part comprising a sleeve, a second part comprising an insert, and at least one seal.

The first part comprises the sleeve. It is also conceivable, that the sleeve forms the first part. According to an embodiment, the sleeve comprises the shape of a tube, a hollow cylinder, or a hollow prism.

According to the invention, the sleeve comprises an opening configured to accommodate the insert.

The sleeve may comprise a first axial end and a second axial end arranged at opposite sides of the sleeve. In a preferred embodiment, the sleeve comprises an opening at the first axial end and an end wall at the second axial end.

The second part comprises the insert. It is also conceivable that the insert forms the second part. The insert may comprise of the shape of a tube or hollow cylinder.

According to an embodiment, an inner diameter of a cavity formed by the sleeve exceeds an outer diameter of the insert. Particularly, the insert may be configured to be inserted into the sleeve. In a preferred embodiment, the insert is configured to mechanically engage with the sleeve.

According to an embodiment of the inventive coupling assembly, the first part and the second part comprise complementary parts of a coupling mechanism configured to mechanically connect the first part to the second part.

Particularly, the insert and the sleeve may comprise complementary parts of a coupling mechanism configured to mechanically connect the insert to the sleeve. For example, an inner surface of the sleeve may comprise a thread configured to mechanically engage with a thread on an outer surface, particularly a lateral surface, of the insert.

According to an embodiment, a first portion of the coupling mechanism may be arranged on the first part, and a second portion of the coupling mechanism may be arranged on the second part. The first portion and the second portion may represent complementary parts of the coupling mechanism. Particularly, a section of the first portion may be configured to mechanically engage with a section of the second portion.

The first portion and the second portion of the coupling mechanism may be configured to provide a threaded connection, a clamp connection, a flange connection, a bayonet joint, or the like.

The coupling mechanism may comprise a safety mechanism configured to prevent the first part and the second part from flying apart when the coupling assembly is opened under pressure. Preferably, the safety mechanism forms a part of the first portion and/or the second portion. For example, the safety mechanism may comprise a pin, a loop, or the like. It is also conceivable that the safety mechanism corresponds to an extra threaded section of a threaded connection, or an extra turn and/or recess of a bayonet joint.

According to an embodiment, the coupling mechanism comprises a threaded connection, wherein the sleeve comprises a female thread and the insert comprises a male thread configured to mechanically engage with the female thread of the sleeve.

Preferably, the female thread is arranged on an inner surface of the sleeve. The male thread may be located on an outer surface, particularly a lateral surface, of the insert.

A first part comprising an insert configured to be screwed into a sleeve of a second part may favourably allow for the coupling assembly to be assembled in a simple and/or time-efficient manner. Furthermore, a coupling mechanism comprising a threaded connection may be cost-efficient and/or easy-to-manufacture.

The at least one seal is arranged between the first part and the second part in such a way to provide a fluid-tight connection between the first part and the second part when the insert is arranged in an end position within the sleeve.

The at least one seal may comprise or consist of a soft material, preferably a pliable or an elastic material. For example, the at least one seal may comprise or consist of an elastomer, particularly a fluoroelastomer (e. g. FKM, FFKM, or FEPM), an ethylene propylene-diene-monomer (EPDM) rubber, a nitrile butadiene (NBR) rubber, or the like. However, the at least one seal may also consist of a composite material, a metal, a metal alloy, or a coated metal. In a preferred embodiment, the at least one seal comprises the shape of an O-ring or a flat washer.

It is conceivable that the at least one seal is arranged between the first part and the second part in such a way, that the at least one seal occludes or seals a gap between the first part and the second part, when the insert is fully accommodated within the sleeve via the coupling mechanism. For example, the insert may be configured to apply a force onto the at least one seal when the insert is screwed into the sleeve.

The fluid-tight connection between the first part and the second part may be provided when the insert is fully accommodated within the sleeve. The insert may be considered arranged in the end position within the sleeve when a section of the insert is in direct mechanical contact with the at least one seal and/or a compressing element according to an embodiment described below. The insert may also be considered arranged in the end position within the sleeve, when the first part and the second part are fully connected via the coupling mechanism.

The coupling mechanism may be configured to guide the insert into the opening of the sleeve in such a way, that the insert presses or abuts against the at least one seal. For example, the at least one seal may be arranged in such a way to be compressed between the first part and the second part, particularly the insert and the sleeve. However, the at least one seal may also be arranged in such a way to be compressed between the insert and a further component of the coupling assembly, such as a compressing element according to an embodiment described below.

Preferably, the at least one seal is configured to prevent a fluid from escaping from an inner volume encompassed by the coupling assembly when the insert is arranged in the end position within the sleeve. The at least one seal may be configured to seal a gap between the first part and the second part of the coupling assembly. However, the at least one seal may also be configured to seal a gap between the insert and a compressing element according to an embodiment described below.

According to the invention, the sleeve and/or the insert comprise at least one vent opening configured to provide a fluid path from an inner volume of the coupling assembly to a surrounding when the insert is arranged within the sleeve in a position between the opening of the sleeve and the end position.

The inner volume of the coupling assembly may represent a volume encompassed by the first part and/or the second part of the coupling assembly. Particularly, the inner volume of the coupling assembly may comprise a first volume encompassed by the first part and a second volume encompassed by the second part.

The at least one vent opening may be configured to provide the fluid path from the inner volume of the coupling assembly to the surrounding, when the insert is arranged within the sleeve in such a way that the insert is spaced from the at least one seal. It is also conceivable that the at least one vent opening is configured to provide the fluid path from the inner volume of the coupling assembly to the surrounding, when the insert is arranged in a position within the sleeve different from the end position. Furthermore, the at least one vent opening may be configured to provide the fluid path from the inner volume of the coupling assembly to the surrounding, when an end section of the insert is arranged within the sleeve in a predefined position between the opening of the sleeve and an end wall of the sleeve.

Particularly, the at least one vent opening may be arranged in such a way to provide the fluid path from the inner volume of the coupling assembly to the surrounding when the first part and the second part are moved apart via the coupling mechanism. Preferably, the fluid path is provided without entirely separating the first part from the second part. For example, the at least one vent opening may be configured to provide the fluid path when the insert and the sleeve are moved apart by 50, 10%, 15% or 20% of a total travel length defined by the coupling mechanism, e. g. an axial length of a threaded section of the insert or an axial length of a threaded section of a screw connecting the first part and the second part.

The at least one vent opening may represent a hole, a perforation, a slot, or the like. The at least one vent opening may extend through a material of the sleeve and/or the insert. Preferably, the at least one vent opening is arranged on a surface of the sleeve and/or the insert in such a way, that the insert is still mechanically engaged with the sleeve via the coupling mechanism, when the fluid path from the inner volume of the coupling assembly to the surrounding is provided via the at least one vent opening. According to an embodiment, the coupling mechanism is configured to separate the insert from the at least one seal, thus providing the fluid path from the inner volume of the coupling assembly to the surrounding.

Preferably, the at least one vent opening is arranged in such a way to provide a fluid path from an inner volume enclosed by the first part and the second part to a surrounding before the first portion is completely disconnected from the second portion. For example, the first portion and/or the second portion of the coupling mechanism may comprise an extra threaded section or an extra thread length (i. e. the safety mechanism) configured to maintain a mechanical connection between the first portion and the second portion while the first part and the second part have been moved apart to such an extent that the vent hole provides the fluid path from an inner volume enclosed by the first part and the second part to a surrounding.

The inventive coupling assembly may allow for relieving a pressure within fluid lines connected via the coupling assembly while the first part is mechanically connected to the second part. Thus, a risk of injury of an operator opening the coupling assembly may favourably be reduced or eliminated. As a further advantage, additional equipment for depressurizing the fluid within the fluid lines, but also additional safety measures, may favourably be omitted.

In contrast to conventional self-sealing couplings, the inventive coupling assembly may avoid a reduction of a flow diameter. Thus, the inventive coupling may favourably be used in cryogenic applications which require a vacuum insulated tube to be routed through a section of the coupling assembly.

The inventive coupling assembly may favourably provide a compact and/or cost-effective connection between fluid lines. The inventive coupling assembly may be manufactured using relatively simple machining processes, thus avoiding expensive manufacturing processes such as welding or complicated machining.

Furthermore, the inventive coupling assembly may provide larger flow diameters in comparison to conventional fluid couplings, particularly self-sealing couplings. Thus, a pressure loss within the coupling assembly may favourably be reduced without significantly increasing an external dimension of the coupling assembly.

According to an embodiment of the inventive coupling assembly, the insert comprises a non-threaded section arranged between a first threaded section and a second threaded section. Outer diameters of the first threaded section and the second threaded section exceed an outer diameter of the non-threaded section.

The non-threaded section may be configured to prevent mechanically engaging with a threaded section of the sleeve when the insert is separated or unscrewed from the sleeve. For example, an inner diameter of a threaded section arranged on the sleeve may exceed the outer diameter of the non-threaded section.

Preferably, a circumference or outer surface of the non-threaded section is offset or indented with respect to circumferences or outer surfaces of the first threaded section and the second threaded section. For example, the outer surface of the non-threaded section may be offset or recessed with respect to the outer surfaces of the first threaded section and the second threaded section to avoid contact with the female thread of the sleeve, when the insert is accommodated within the sleeve.

The non-threaded section may be configured to support a release of pressurized fluid when the insert is unscrewed from the sleeve. In a preferred embodiment, an axial length of the non-threaded section exceeds an axial length of the female thread of the sleeve. Thus, the insert may be disengaged from the sleeve when the second threaded section is unscrewed from the sleeve. Particularly, a section of the sleeve comprising the female thread may be loosely arranged between the first threaded section and the second threaded section of the insert, when the second section is unscrewed from the sleeve. Thus, a pressurized fluid may be allowed to pass through a gap between the non-threaded section and the section of the sleeve comprising the female thread. The first threaded section may be configured to prevent a complete separation of the first part and the second part, once the second threaded section has been separated or unscrewed from the sleeve. The insert may be separated from the at least one seal and/or a compressing element when the second threaded section is disconnected or unscrewed from the sleeve, thus providing the fluid path from the inner volume of the coupling assembly to the surrounding.

In providing an insert comprising a non-threaded section arranged between a first threaded section and a second threaded section, a release of pressure from the inner volume of the coupling assembly may favourably be facilitated.

According to an embodiment, the inventive coupling assembly comprises at least one retaining element configured to prevent movement of the first part along a shaft of a fluid line.

The at least one retaining element may be configured to circumferentially encompass the fluid line along a section of a longitudinal axis of the fluid line.

Preferably, the at least one retaining element is configured to maintain the sleeve in a predefined relative position with respect to the fluid line. The at least one retaining element may correspond to a ring or a tube. Preferably, the at least one retaining element is configured to attach to the fluid line via a suitable mechanical connection. For example, the at least one retaining element may be crimped, clamped, glued, and/or welded onto the fluid line.

According to an embodiment, the at least one retaining element comprises or consists of a rigid material, such as a polymer, a metal, or a composite material.

In a preferred embodiment, the inventive coupling assembly comprise at least two retaining elements. The at least two retaining elements may be arranged adjacent to an end wall of the sleeve. Particularly, the two retaining elements may be arranged in such a way to confine the end wall of the sleeve from two opposing sides. The at least two retaining elements may be configured to attach to the fluid line via a suitable mechanical connection.

In providing a coupling assembly comprising a retaining element, the sleeve may be prevented from moving along a shaft of a fluid line. Thus, an undesired slippage of the sleeve from the fluid line may favourably be prevented.

In a preferred embodiment, the inventive coupling assembly comprises a retaining element and a compressing element. The sleeve comprises an end wall according to an embodiment described above. The retaining element is configured to circumferentially encompass a fluid line along a section of a longitudinal axis of the fluid line and the compressing element is configured to compress the retaining element between the end wall of the sleeve and the compressing element when the insert of the second part is arranged in the end position within the sleeve.

The retaining element may be configured according to an embodiment described above. However, the retaining element may also comprise or consist of an elastic material, particularly an elastomer. According to an embodiment, the retaining element is configured to be reversibly or elastically deformed by the compressing element. A shape of the retaining element may correspond to a torus, a tube, a hollow cylinder, or a hollow prism.

The retaining element may comprise a hole or a perforation configured to accommodate a fluid line. For example, the fluid line may extend through the hole or perforation in the retaining element. Preferably, the compressing element also comprises a hole or a perforation configured to accommodate a fluid line. According to an embodiment, the retaining element and the compressing element are configured to be lined-up along a longitudinal axis of a fluid line or pipeline. Preferably, the retaining element and the compressing element are configured to allow for the fluid line or pipeline to extend through the holes in the retaining element and the compressing element.

According to an embodiment, the retaining element and the compressing element are arranged between the first part and the second part in such a way, that the insert exerts a force onto the compressing element (e. g. via the at least one seal), when the insert is arranged in the end position within the sleeve. The compressing element may be configured to transmit the force applied via the insert to the retaining element. Preferably, the retaining element is arranged between the end wall of the sleeve and the compressing element. Thus, the retaining element may be deformed between the compressing element and the end wall when the insert is arranged in the end position within the sleeve. It is conceivable that the retaining element is configured to provide a force-locking mechanical connection with the fluid line when compressed by the compressing element.

In a further embodiment, the retaining element comprises or consists of a rigid material according to an embodiment described above. In this case, the retaining element may be permanently attached to the fluid line, for example via a weld or an adhesive joint. It is conceivable that the compressing element and the retaining element form a coherent structure. For example, the compressing element and the retaining element may be mechanically connected or form a monolithic structure.

In providing a coupling assembly comprising a retaining element and a compressing element, a sealing position of the insert (i. e. the end position of the insert within the sleeve) may favourably be adapted to an engagement distance of the coupling mechanism. For example, lengths of the threaded sections of the first part and the second part may favourably be reduced in dependence of an axial dimension of the compressing element and the retaining element.

In providing a coupling assembly comprising an elastic retaining element and a compressing element, a reversible mechanical connection may be provided between a fluid line and the coupling assembly. Particularly, the reversible mechanical connection between the coupling assembly and the fluid line may be provided when the first part and the second part are connected via a coupling mechanism according to an embodiment described above. Thus, the coupling assembly may be connected to a fluid line in a simple and time-efficient manner.

According to an embodiment, a section of the compressing element comprises the shape of cone, a frustrum, a hemisphere, a cylinder, or a prism.

For example, a section of the compressing element may comprise a rounded and/or tapered shape. The section of the compressing element comprising the rounded and/or tapered shape may be configured to receive a force applied via the insert. The insert may comprise a section which is shaped complementary to the rounded and/or tapered section of the compressing element.

Preferably, an area of the section of the compressing element comprising the rounded and/or tapered shape exceeds an area of a surface of the compressing element transmitting the force onto the retaining element. Thus, the force applied to the compressing element may favourably be used to increase a pressure on the retaining element.

Furthermore, the rounded and/or tapered shape of the compressing element may favourably provide a centred alignment with a complementary shaped insert when the first part and the second part are put together.

According to an embodiment of the inventive coupling assembly, the compressing element comprises a tapered section and the insert comprises a bore with an inner taper configured to accommodate the tapered section of the compressing element.

The bore of the insert may be configured to accommodate the tapered section of the compressing element. It is also conceivable that the inner taper of the bore of the insert is configured to mechanically engage with the tapered section of the compressing element. Preferably, an opening and/or a section of the bore of the insert is shaped complementary to the tapered section of the compressing element.

According to the invention, the at least one seal is configured to be arranged between the compressing element and the insert in such a way to provide the fluid-tight connection between the first part and the second part when the insert is arranged in the end position within the sleeve.

The at least one seal may be configured to be arranged between the tapered section of the compressing element and a surface of the insert comprising the inner taper. In a preferred embodiment, the at least one seal is configured as an O-ring. The at least one seal may be accommodated within a dedicated groove arranged within the tapered section of the compressing element and/or the surface of the insert comprising the inner taper. However, the at least one seal may also be configured as a gasket or a cone seal.

In an assembled state of the coupling assembly, the insert may be arranged in the end position within the sleeve and exert a force onto the at least one seal. The at least one seal may be configured to be deformed by the force applied via the insert. Particularly, the at least one seal may be configured to seal a passage or fluid path between the insert and the compressing element, thus providing a fluid-tight connection between the insert and the compressing element.

The compressing element may be arranged between the end wall of the sleeve and the insert of the first part. It is conceivable that the compressing element is held in place by the end wall of the sleeve, the retaining element and/or a fluid line extending through a hole in the end wall of the sleeve.

According to an embodiment, the compressing element comprises a main body, particularly a cone-shaped body, including a hole or inner bore. The hole or inner bore may extend through the body of the compressing element along an axial direction of the compressing element. Preferably, the hole or inner bore is configured to allow for a fluid line to be routed through the body of the compressing element.

A tapered shape of the compressing element may favourably facilitate an insertion of the insert of the first part into the sleeve of the second part.

In an embodiment of the inventive coupling assembly, the at least one vent opening is arranged in a lateral surface of the sleeve. It is also conceivable that the sleeve comprises an end wall and the at least one vent opening is arranged in the end wall.

A vent opening arranged within the lateral surface of the sleeve may be blocked by the insert when the insert is arranged in the end position within the sleeve or when the insert is fully accommodated within the sleeve. In contrast, a vent opening arranged in the end wall of the sleeve may be unobstructed by the insert, but also a retaining element and/or a compressing element according to an embodiment described above, when the insert is arranged in the end position within the sleeve. The at least one vent opening may be arranged adjacent or in proximity to a hole in the end wall configured to accommodate a fluid line.

In a preferred embodiment, the coupling assembly comprises a plurality of vent openings. The plurality of vent openings may be arranged in the end wall and/or the lateral surface of the sleeve. Particularly, vent openings arranged within the end wall of the sleeve may be arranged in such a way to surround the hole in the end wall configured to accommodate a fluid line.

According to an embodiment, at least one vent opening or a plurality of vent openings of the inventive coupling assembly is configured to mechanically engage with a dedicated tool configured for tightening a mechanical connection between the first part and the second part of the coupling assembly. For example, the dedicated tool may be configured to engage with the at least one vent opening or the plurality of vent openings to rotate the second part relative the first part or to clamp the first part to the second part.

A vent opening arranged within the lateral surface of the sleeve and/or the end wall of the sleeve may favourably engage with a dedicated tool configured for tightening a mechanical connection between the first part and the second part. Furthermore, a vent opening arranged within the end wall of the sleeve may favourably provide an unobstructed fluid path from an inner volume of the coupling assembly or an inner volume of a fluid line attached to the coupling assembly when the first part and the second part are separated or moved apart. Thus, a depressurization of a fluid within the coupling assembly may favourably be facilitated when the coupling assembly is opened or disassembled.

In arranging a vent opening in the lateral surface of the sleeve, a depressurization of a fluid within the coupling assembly may substantially commence as soon as the insert unblocks or moves past the vent opening when the first part and the second part are separated. Thus, an opening point or depressurization point of the coupling assembly may favourably be controlled via a location or arrangement of the at least one vent opening.

According to an embodiment of the inventive coupling assembly, the at least one vent opening is formed as a groove or channel in an outer surface of the insert.

The at least one vent opening may be embodied as a groove or a channel in an outer surface of the insert. The groove or channel may be formed in a lateral surface of the insert. Preferably, the groove or channel is oriented in parallel to a longitudinal axis of the insert. The groove or channel may be formed in such a way that a pressurized fluid is allowed to pass through the groove or channel between the insert and the sleeve when the first part and the second part, particularly the insert and the at least one seal and/or the compressing element, are separated or moved apart.

According to an embodiment, an outer surface of the insert comprises a thread configured to engage with a thread on an inner surface of the sleeve. The groove or channel may be formed within a section of the insert comprising the thread. Particularly, the groove or channel may at least partially interrupt the thread on the insert. The groove or channel may represent a recess in an outer surface, particularly a lateral surface, of the insert. Preferably, the groove or channel is arranged in such a way to avoid compromising a mechanical connection between the first part and the second part via the coupling mechanisms.

In providing at least one vent opening formed as a groove or channel in an outer surface of the insert, a pressurized fluid may be discharged in an axial direction away from the sleeve when the coupling assembly is opened or disassembled. Thus, the discharging fluid may favourably be directed away from a hand of an operator opening or disassembling the coupling assembly.

Furthermore, in arranging the at least one vent opening on the insert according to an embodiment described above, a dimension or space requirement of the coupling assembly may favourably be reduced.

In a preferred embodiment, the inventive coupling assembly comprises a passage configured to accommodate a vacuum insulated fluid line and allow for the vacuum insulated fluid line to extend through the coupling assembly along a longitudinal axis of the coupling assembly.

The passage configured to accommodate the vacuum insulated fluid line may be formed by inner bores of the sleeve and/or the insert. It is also conceivable that the passage is formed by holes in components of the coupling assembly configured to accommodate the vacuum insulated fluid line. For example, the passage may be formed by holes in the end wall of the sleeve, the retaining element, and the compressing element.

In providing an inventive coupling assembly comprising a passage configured to accommodate a vacuum insulated fluid line, the coupling assembly may favourably be used for cryogenic applications. Particularly, the inventive coupling assembly may be insulated from the fluid via the vacuum insulation of the fluid line. Thus, a material of the at least one seal may favourably be independent from a temperature of the fluid in the fluid line. For example, the at least one seal may consist of an elastomer, such as rubber, whilst the fluid being transferred through the vacuum insulated fluid line is at a cryogenic temperature or a melting temperature of the elastomer. Thus, costs of the inventive coupling assembly may favourably be reduced in comparison to conventional KF-type flanges or couplings using metal seals.

The inventive insert is configured for use in a coupling assembly according to an embodiment described above. Particularly, the insert may form a second part of a coupling assembly according to an embodiment described above.

The inventive insert comprises at least one vent opening formed as a groove or channel in an outer surface the insert. The groove or channel may be formed in a lateral surface of the insert. Particularly, the groove or channel may interrupt at least a section of a thread provided on an outer surface of the insert according to an embodiment described above.

However, the at least one vent opening may be arranged in any suitable way to provide an unobstructed fluid path from an inner volume of the coupling assembly to a surrounding when the first part and the second part are moved apart, but before the first part and the second part are completely separated from one another.

The insert may comprise an inner bore configured to accommodate a fluid line. For example, the inner bore may comprise a cylindrical or tubular shape. The inner bore may extend axially through a body of the insert. Particularly, the inner bore may extend through the insert along a longitudinal axis, particularly an axis of rotational symmetry, of the insert. The inner bore may be configured in such a way to allow for a fluid line to be routed through the body of the insert via the inner bore.

The insert may comprise a connecting mechanism configured to mechanically connect the insert to a fluid line or a fluid system. The insert may be attached to the fluid line via any suitable mechanical connection, such as a form-locking connection, a force-locking connection and/or a material bond. For example, the connecting mechanism may be configured to attach the insert to the fluid line via a clamping mechanism, a crimping mechanism, or a wedging mechanism. It is also conceivable that the insert is glued to the fluid line via an adhesive or welded to the fluid line.

The inventive insert shares the advantages of the inventive coupling assembly.

The inventive sleeve is configured for use in a coupling assembly according to an embodiment described above. Particularly, the sleeve may form a first part of a coupling assembly according to an embodiment described above.

According to the invention, the sleeve comprises an opening configured to accommodate an insert, and at least one vent opening arranged in a wall of the sleeve. The sleeve may be configured according to an embodiment described above.

The at least one vent opening may be arranged in an end wall of the sleeve and/or in a lateral surface of the sleeve. In a preferred embodiment, the sleeve comprises a plurality of vent openings arranged in the end wall and/or the lateral surface of the sleeve.

The sleeve may comprise a hole or bore configured to accommodate a fluid line. The hole or bore may be arranged within an end wall of the sleeve and/or extend through a body of the sleeve along a longitudinal axis of the sleeve. In a preferred embodiment, the hole or bore is substantially circular and a geometric centre of the hole or bore is arranged on an axis, particularly an axis of rotational symmetry, of the sleeve. It is conceivable that at least a section of the sleeve comprises the shape of a hollow cylinder or a hollow prism. The geometric centre of the hole or bore in the end wall may be arranged on a longitudinal axis or an axis of rotational symmetry of the sleeve.

As described above, the sleeve may comprise a first axial end comprising an opening configured to accommodate an insert and a second axial end comprising the end wall. The end wall may comprise the shape of a disc, a torus, or a flat washer. The end wall may be mechanically connected to the sleeve, for example via a weld seam or an adhesive. However, the sleeve and the end wall may also form a monolithic structure.

The sleeve may be configured to accommodate a fluid line within an inner volume of the sleeve. Particularly, the hole or bore in the end wall of the sleeve may allow for the fluid line to be inserted into a tubular cavity circumferentially enclosed by a wall of the sleeve along at least a section of a longitudinal axis of the sleeve. The sleeve and the fluid line may be connected via a connecting mechanism described above.

It is conceivable that the sleeve is configured to be mechanically connected to the fluid line via at least one retaining element, but also a compressing element, according to an embodiment described above. For example, the insert may compress the retaining element between the end wall and the compressing element when the insert is arranged in the end position within the sleeve according to an embodiment described above.

The sleeve, the at least one retaining element and the compressing element may form separate components. However, as the at least one retaining element, but also the compressing element, are configured to attach the fluid line to the coupling assembly, the coupling assembly and/or the sleeve may be considered to comprise the at least one retaining element and the compressing element.

According to an embodiment, a fluid line accommodated within an inner bore of the insert may correspond to a second fluid line. A fluid line accommodated within the tubular cavity of the sleeve may correspond to a first fluid line different from the second fluid line. The insert and the sleeve may comprise complementary parts of a coupling mechanism according to an embodiment described above. Preferably, the insert and the sleeve are configured to provide a fluid connection between the first fluid line and the second fluid line when connected via the coupling mechanism. Particularly, the insert and the sleeve may form an inventive coupling assembly according to an embodiment described above. The coupling assembly may further comprise at least one retaining element, but also a compressing element, according to an embodiment described above. Preferably, the sleeve and/or the insert comprise a vent opening according to an embodiment described above.

The inventive sleeve shares the advantages of an inventive coupling assembly according to an embodiment described above.

The inventive fluid line connection comprises an inventive coupling assembly according to an embodiment described above. The first part of the coupling assembly is attached to a first fluid line and the second part of the coupling assembly is attached to a second fluid line. A mechanical connection between the first fluid line and the first part, but also between the second fluid line and the second part, may be configured according to an embodiment described above.

In a preferred embodiment, the fluid line connection comprises at least one retaining element and a compressing element according to an embodiment described above. At least the first part may be mechanically connected or secured to the first fluid line via the at least one retaining element when the insert of the second part is fully accommodated within the first part in a predefined position (e. g. when the insert of the second part is arranged in the end position within the sleeve of the first part).

According to the invention, the insert of the second part is arranged in the end position within the sleeve of the first part to provide the fluid line connection. For example, the insert may be fully accommodated within the sleeve. As described above, the first part may correspond to the sleeve and the second part may correspond to the insert.

The at least one seal is arranged between the first part and the second part in such a way to provide a fluid-tight connection between the first part and the second part. For example, the insert may be considered fully accommodated within the sleeve, when the insert is in contact with the at least one seal and exerts a force onto a surface of the at least one seal, thus providing a fluid-tight between the insert and the at least one seal. Particularly, the insert may be considered fully accommodated within the sleeve, when a fluid-tight connection is provided between the first fluid line and the second fluid line via the coupling assembly.

The insert may also be considered fully accommodated within the sleeve when the insert is completely inserted within the sleeve via a coupling mechanism according to an embodiment described above. Particularly, the insert may be considered fully accommodated within the sleeve when the insert is arranged in the end position within the sleeve.

In one embodiment, the insert is considered fully accommodated within the sleeve, when the insert is in contact with the at least one seal and exerts a force onto a surface of the at least one seal providing a fluid-tight connection between the insert, the at least one seal and the compressing element.

A fluid-tight connection may be configured to prevent leakage of a fluid, particularly a pressurized fluid, from the fluid line connection. For example, the fluid-tight connection may be configured to prevent leakage of a fluid from the first fluid line and/or the second fluid line connected via the coupling assembly.

The inventive fluid line connection may comprise an inventive coupling assembly mechanically connected to the first fluid line and the second fluid line in such a way to provide a fluid connection, particularly a fluid-tight connection, between the first fluid line and the second fluid line.

The coupling assembly according to the invention is configured to provide a fluid connection between two or more fluid lines or two or more fluid systems. It is also conceivable that the coupling assembly described herein is configured to provide a fluid connection between a plurality of fluid lines or a plurality of fluid systems. For example, the first part of the coupling assembly may be attached to a first plurality of fluid lines and the second part of the coupling assembly may be attached to a second plurality of fluid lines according to embodiments described herein.

A fluid line as used herein may denote a pipe, a pipeline, a conduit, or a tube configured for transporting a pressurized fluid. However, a fluid line may also refer to a pipe socket, or a connecting piece connected to a fluid system comprising a pressurized fluid. For example, the first part and/or the second part may be mechanically connected to a connecting piece. The first part and/or the second part may be connected to the connecting piece via any conventional mechanism. For example, the first part and/or the second part may be glued or welded to a connecting piece or a fluid line. It is also conceivable that the first part and/or the second part is flanged, screwed, or clamped to a connecting piece or a fluid line. For example, a first part and/or a second part as described above may comprise a flange configured to mechanically connect the first part and/or the second part to a flange on a fluid line or a connecting piece. However, the first part and/or the second part may also be secured to a connecting piece or a fluid line via at least one retaining element according to an embodiment described above.

According to an embodiment, the inventive fluid line connection, comprises a coupling assembly including a retaining element and a compressing element according to an embodiment described above, wherein the retaining element is compressed between the end wall of the sleeve and the compressing element and wherein the first fluid line is mechanically attached to the first part via the retaining element.

The first part, the second part, the retaining element and the compressing element may be configured according to an embodiment described above.

Preferably, the first part is mechanically connected or secured to the first fluid line via the retaining element. As described above, the retaining element may comprise a hole configured to accommodate the first fluid line. Particularly, the hole in the retaining element may be configured for routing the first fluid line through a body of the retaining element. The coupling assembly may be configured in such a way that the compressing element compresses the retaining element when the second element and the first element are mechanically connected via the coupling mechanism, particularly when the insert is fully accommodated and/or arranged in the end position within the sleeve.

According to an embodiment, the compressed retaining element may be configured to press against a surface of the first fluid line to secure the retaining element, but also the first part, to the first fluid line.

The inventive fluid line connection shares the advantages of an inventive coupling assembly according to an embodiment described above.

It is to be understood that a gap between complementary threads of a threaded connection of a conventional coupling is different from a vent opening according to the invention. Threaded connections are usually not considered to be fluid-tight connections and may allow for a slow release of a fluid from a pressurized fluid line. However, such a slow release of fluid is different from a controlled depressurization of the fluid line, when opening the coupling assembly (without entirely separating the first part and the second part) according to the invention. Gaps between threaded sections of a conventional coupling are not considered to provide an unobstructed fluid path from an inner volume of the coupling assembly to a surrounding when the insert is arranged within the sleeve in a position between the opening of the sleeve and the end position. Particularly, threaded connections in conventional couplings still carry the risk of blowing apart when separated under pressure.

Further advantages and details of the present invention may be recognized from the embodiments described below as well as the drawings. The figures show:
Fig. 1 a schematic representation of an embodiment of an inventive coupling assembly comprising an inventive sleeve,
Fig. 2 a schematic representation of an embodiment of an inventive coupling assembly,
Fig. 3 a schematic representation of an embodiment of an inventive insert,
Fig. 4 a schematic representation of an embodiment of an inventive coupling assembly,
Fig. 5 a schematic representation of an embodiment of an inventive coupling assembly,
Fig. 6 a schematic representation of an embodiment of an inventive coupling assembly,
Fig. 7 a schematic representation of an embodiment of an inventive coupling assembly,
Fig. 8 a schematic representation of an embodiment of an inventive coupling assembly,
Fig. 9 a schematic representation of an embodiment of an inventive fluid line connection.

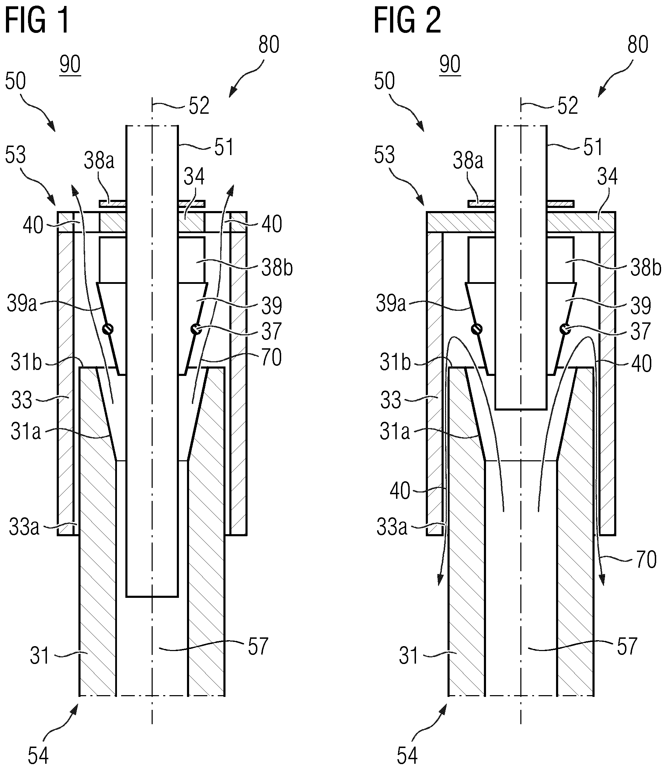

Fig. 1 shows an embodiment of an inventive coupling assembly 50 comprising a sleeve 33, an insert 31, retaining elements 38 (38a and 38b), a compressing element 39, and a seal 37.

The sleeve 33 may correspond to a nut, preferably a threaded nut. A cross section of the sleeve 33 may comprise an oval, a circular, or a polygonal shape. In a preferred embodiment, the sleeve 33 comprises a hexagonal cross-section configured to mechanically engage with a standard wrench or spanner. However, the cross-section of the sleeve 33 may also comprise a different shape, e. g. a circular shape. In such a case, a C-spanner may be used to tighten a mechanical connection between the first part 53 and the second part 54. For example, the C-spanner may be configured to mechanically engage with one or more vent openings 40. The lateral walls of the sleeve 33 may allow for a linear movement of the insert 31 inside the sleeve 33 via the coupling mechanism.

In the depicted embodiment, the end wall 34 of the sleeve 33 comprises a hole or opening to accommodate the fluid line 51. The fluid line 51 passes through the hole in the end wall 34 along a longitudinal axis 52 of the coupling assembly 50. In an embodiment, the coupling assembly 50 is rotationally symmetric and the axis 52 corresponds to an axis of rotational symmetry of the coupling assembly 50.

Preferably, the coupling mechanism mechanically connecting the insert 31 to the sleeve 33 comprises a threaded connection. For example, an inner surface of the sleeve 33 comprises a female thread configured to mechanically engage with a male thread provided on an outer surface of the insert 31. In the embodiment depicted in Fig. 1, the insert 31 is moved relative to the sleeve 33 along the axis 52 when the insert 31 is screwed into the sleeve 33. The sleeve 33 may form a first part 53 of the coupling assembly 50 and the insert 31 may form a second part 54 of the coupling assembly 50. The coupling mechanism is configured to connect and/or disconnect the first part 53 and the second part 54 of the coupling assembly 50.

A fluid-tight connection is provided when the insert 31 is arranged in an end position within the sleeve 33, e. g. when the tapered section 31a of the insert 31 contacts or abuts against the seal 37, and optionally the tapered section 39a of the compressing element 39. In the depicted example, the seal 37 is embodied as an O-ring circumferentially encompassing at least a part of the tapered section 39a of the compressing element 39. When the insert 31 is arranged in the end position or fully accommodated within the sleeve 33, the insert 31 may apply a force onto the seal 37, and optionally the tapered section 39a of the compressing element 39. Thus, a fluid-tight connection is provided between the tapered section 31a of the insert 31 and the seal 37.

Preferably, the retaining elements 38 and the compressing element 39 comprise holes or openings for accommodating the fluid line 51. The holes or openings in the retaining elements 38 and the compressing element 39 may extend through bodies of the retaining elements 38 and the compressing element 39 along the longitudinal axis 52.

According to an embodiment, the force applied to the compressing element 39 via the insert 31 is transmitted to the retaining element 38b. The retaining element 38b may consist of an elastic material. The force transmitted to the retaining element 38b may deform the retaining element 38b in such a way that a share of the force applied via the insert 31 is transmitted onto an outer circumference or lateral surface of the fluid line 51. Thus, the coupling assembly 50 may be reversibly secured or attached to the fluid line 51 when the insert 31 is arranged in the end position within the sleeve 33 and applies a force onto the seal 37, and optionally the tapered section 39a of the compressing element 39. It is also conceivable that an outer diameter of the fluid line 51 exceeds an inner diameter of the hole extending through the elastic retaining element 38b. Thus, the retaining element 38b may exert a force onto an outer surface of the fluid line 51 and may need to be stretched when mounting the retaining element 38b onto the fluid line 51.

In an alternative embodiment, the retaining element 38b may consist of a rigid material, such as a rigid polymer, a metal, or a composite material. The retaining element 38b may be glued or welded onto the fluid line 51 to prevent the sleeve 33 from moving along a shaft of the fluid line 51.

In the embodiment depicted in Fig. 1, the coupling assembly 50 comprises an inventive sleeve 33. The sleeve 34 includes an end wall 34 comprising a plurality of vent openings 40. The vent openings 40 are arranged in proximity to the hole in the end wall 34 accommodating the fluid line 51. The vent openings 40 may correspond to holes, perforations, or slots within a material of the end wall 34. The vent openings 40 allow for a depressurization of a fluid within the coupling assembly 50, when the insert 31 is separated from the seal 37. In the depicted example, a fluid path 70 from an inner volume 57 of the coupling assembly 50 to a surrounding 90 is provided when the tapered section 31a of the insert 31 is separated from the seal 37.

The inventive coupling assembly 50 may favourably allow for a depressurization of a fluid within the fluid line 51 without requiring a complete separation of the insert 31 and the sleeve 33. In the depicted example, the fluid path 70 is provided while the insert 31 is still mechanically engaged with the sleeve 33 via the coupling mechanism. As the vent openings 40 are provided within the end wall 34, the fluid can escape in the axial direction 52, away from a hand of an operator in contact with a lateral surface of the sleeve 33 when unscrewing the insert 31 from the sleeve 33.

In the embodiments depicted in Figs. 1, 2 and 4 to 7, the end wall 34 of the sleeve 33 is arranged between the retaining elements 38a and 38b. In a preferred embodiment, the retaining element 38a is embodied as a circlip or snap ring mechanically attached to an outer circumference of the fluid line 51. However, the retaining elements 38a and 38b may comprise arbitrarily shaped bodies reversibly or permanently attached to the fluid line 51. Preferably, the retaining elements 38a and 38b are configured to prevent movement of the sleeve 33 along a shaft of the fluid line 51.

The retaining element 38b and the compressing element 39 may consist of different materials. In some embodiments, the retaining element 38b and the compressing element 39 are separate components. Particularly, the retaining element 38b and the compressing element 39 may be separate or disjoint from one another until the coupling assembly 51 is assembled in an intended fashion to form a fluid line connection 80. In other embodiments, the retaining element 38b and the compressing element 39 may form a coherent structure. For example, the retaining element 38b and the compressing element 39 may be mechanically connected and/or form a monolithic structure.

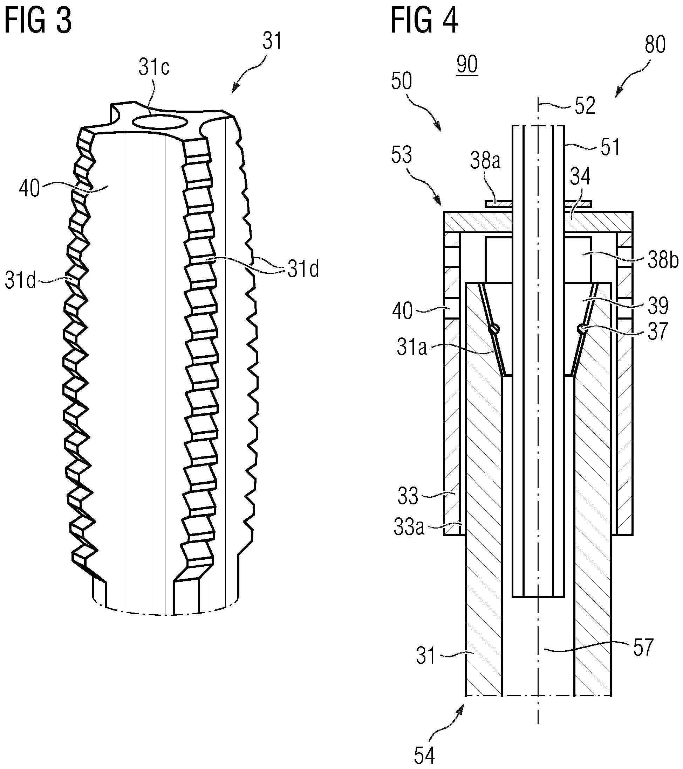

Fig. 2 shows an embodiment of the coupling assembly 50, wherein the at least one vent opening 40 is formed as one or more grooves or channels in an outer surface of the insert 31 (see Fig. 3).

A fluid path 70 from an inner volume 57 of the coupling assembly 50 to a surrounding 90 is provided when the tapered section 31a of the insert 31 is separated from the seal 37 via the coupling mechanism as depicted in Fig. 2. In the embodiments depicted in Figs. 1 and 2, the fluid path 70 is closed when the insert 31 is arranged in the end position within the sleeve 33, e. g. when the insert 31 is fully accommodated within the sleeve 33 or when the tapered section 31a of the insert 31 abuts or presses against the seal 37, and optionally the tapered section 39a of the compressing element 39.

The inventive coupling assembly 50 may favourably allow for a depressurization of a fluid within the fluid line 51 without requiring a complete separation of the insert 31 and the sleeve 33.

Fig. 3 shows a detailed view of an inventive insert 31 comprising a plurality of vent openings 40 formed as grooves or channels in an outer surface of the insert 31. The insert 31 may comprise threaded sections 31d (e. g. sections of a second portion of the coupling mechanism) and one or more grooves or channels 40 interrupting the threaded sections 31d. The insert 31 comprises an inner bore 31c extending or connecting to the fluid line 51 when the insert 31 is fully accommodated within the sleeve 33. The inner bore 31c of the insert 31 may comprise a tapered section 31a in accordance with the embodiment shown in Fig. 2. The tapered section 31a may be configured for resting against the seal 37, and optionally the tapered section 39a of the compressing element 39, when the insert 31 is fully accommodated within the sleeve 33.

Fig. 4 shows a further embodiment of the inventive coupling assembly 50. In the depicted example, a plurality of vent openings 40 is arranged in a lateral surface of the sleeve 33. Thus, the pressurized fluid escapes in a radial direction of the coupling assembly 50 when the tapered section 31a of the insert 31 is separated from the seal 37. The retaining elements 38 and the compressing element 39 may be implemented in accordance with an embodiment depicted in Figs. 1 and 2.

In Fig. 4 the insert 31 is arranged in the end position within the sleeve 33, thus preventing a pressurized fluid from escaping from the inner volume 57 of the coupling assembly 50 via the vent openings 40. When the insert 31 is arranged in the end position within the sleeve 33, the insert 31 or second part may be considered fully accommodated within the sleeve 33 or first part.

Preferably, the coupling assembly 50 is configured to allow for the fluid line 51 to extend through the coupling assembly 50 along the axial direction 52. Thus, the coupling assembly 50 may favourably allow for connecting a vacuum insulated fluid line 51 to a further fluid line or a fluid system 56. The holes in the sleeve 33, the retaining elements 38, and the compressing element 39 are preferably configured to accommodate an outer diameter of the vacuum insulated fluid line 51. It is conceivable that the holes in the sleeve 33, the retaining elements 38, and the compressing element 39 form a passage allowing the vacuum insulated fluid line 51 to extend through at least a section of the coupling assembly 50. For example, the fluid line 51 or vacuum insulated fluid line may extend past the compressing element 39 or past the opening 33a of the sleeve 33.

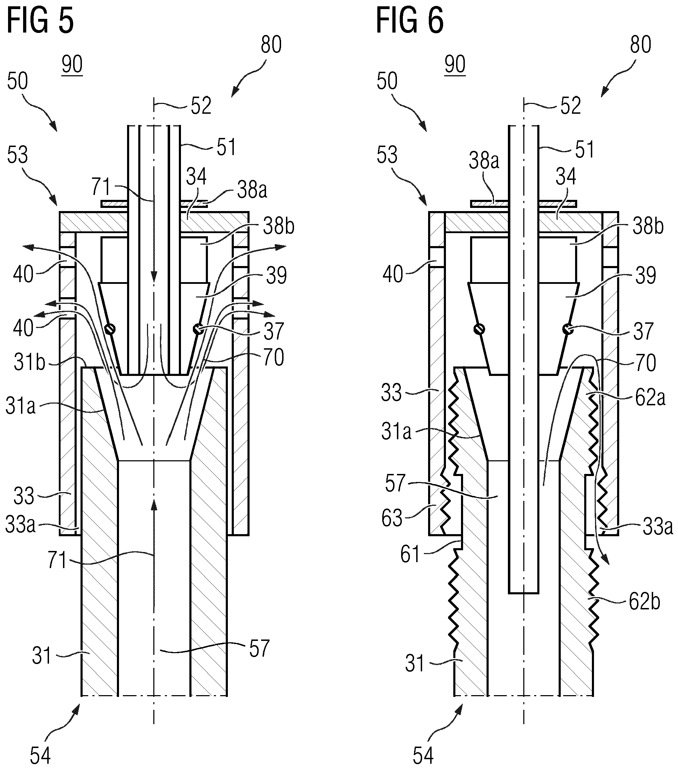

Fig. 5 shows the embodiment of the coupling assembly 50 depicted in Fig. 4. In contrast to Fig. 4, the insert 31 is arranged within the sleeve 33 in a position between the opening 33a of the sleeve 33 and the end position. Particularly, the tapered section 31a of the insert 31 is separated from the seal 37 to provide a fluid path 70 from the inner volume 57 of the coupling assembly 50 to the surrounding 90.

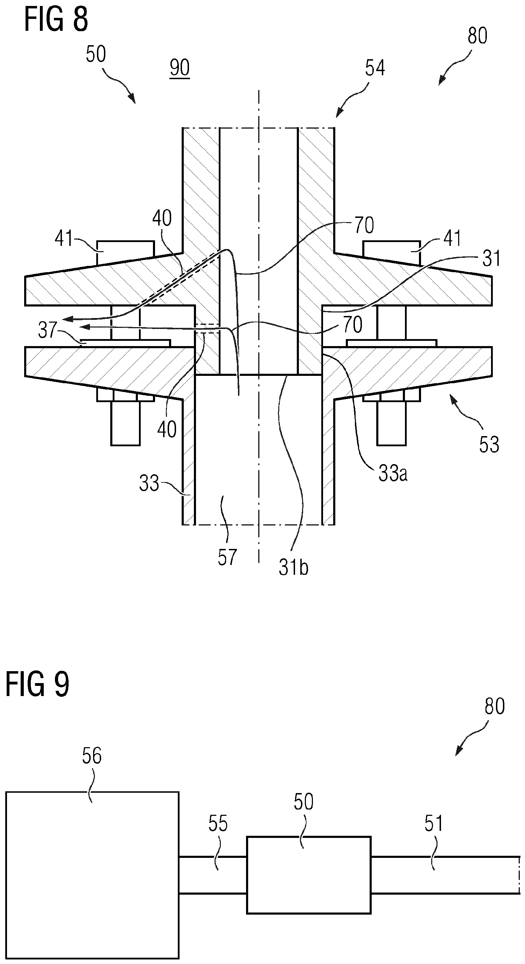

The embodiments of the coupling assembly 50 described herein may allow for a pressurized fluid to escape from an inner volume of the fluid line 51, but also from an inner volume of the insert 31 (as indicated by arrows 71), via the fluid path 70. The insert 31 may be connected to a further fluid line or a connecting piece connecting the insert 31 to a fluid system 56 (see Fig. 9).

In the embodiment depicted in Fig. 5, the coupling assembly 50 comprises a passage configured to accommodate a vacuum insulated fluid line 51. The end wall 34, the retaining elements 38, and the compressing element 39 comprise holes configured to accommodate the vacuum insulated fluid line 51. The holes in the end wall 34, the retaining elements 38, and the compressing element 39 may form the passage accommodating the vacuum insulated fluid line 51. The passage may allow for the vacuum insulated fluid line 51 to extend through the coupling assembly 50 along the axis 52.

The coupling assembly 50 depicted in Fig. 5 may be used in conjunction with smaller vacuum insulated fluid lines, but also high-pressure fluid lines. In the illustrated embodiment, an end section of the fluid line 51 coincides with an end section of the compressing element 39. However, depending on the application, the end section of the fluid line 51 may extend beyond the end section of the compressing element 39 or beyond the opening 33a of the sleeve 33 (see for example Fig. 4).

Fig. 6 shows a further embodiment of the inventive coupling assembly 50. In the depicted example, the insert 31 comprises a non-threaded section 61 arranged between a threaded section 62a and a threaded section 62b. Preferably, outer diameters of the threaded sections 62a and 62b exceed an outer diameter of the non-threaded section 61. An inner diameter of a threaded section 63 arranged on the sleeve 33 exceeds the outer diameter of the non-threaded section 61. Furthermore, an axial length of the non-threaded section 61 exceeds an axial length of the threaded section 63 of the sleeve 33. Thus, the insert 31 may be loosely attached to the sleeve 31, once the second threaded section 62b has been unscrewed from the threaded section 63 or moved past the threaded section 63away from the end wall 34. In this configuration, a fluid path 70 is provided which passes through a gap between the non-threaded section 61 of the insert 31 and the threaded section 63 of the sleeve 33.

After the pressurized fluid has been released from the coupling assembly 50, an operator or technician may engage the sleeve 33 on the first thread 62a to fully separate the sleeve 33 from the insert 31. This provides an extra level of safety because a secondary operation is needed to fully detach the first part 53 from the second part 54.

In the depicted embodiment, sealing the coupling assembly 50 may require the threaded section 62b of the insert 31 to mechanically engage with the threaded section 63 of the sleeve 33 and the insert 31 to be screwed into the sleeve 33 until the tapered section 31a of the insert 31 abuts or presses against the seal 37. Thus, the insert 31 is arranged in the end position within the sleeve 33 and the coupling assembly 50 is assembled and sealed.

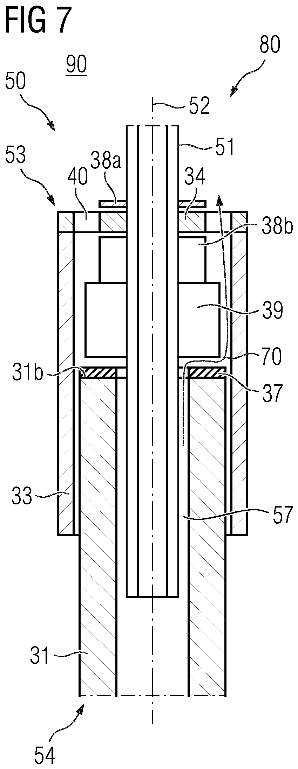

Fig. 7 shows a further embodiment of the inventive coupling assembly 50. In the depicted example, the coupling assembly 50 is sealed fluid-tight, when the insert 31 is arranged in the end position within the sleeve 33, i. e. when the end section 31b of the insert 31 presses the flat seal 37 or gasket against the compressing element 39. Preferably, the insert 31 and the sleeve 33 comprise complementary parts of a coupling mechanism, particularly a threaded connection, configured to connect the insert 31 and the sleeve 33 according to an embodiment described above.

In the example shown in Fig. 7, the compressing element 39 is formed as a simple cylinder or block.

According to an embodiment, the retaining element 38b may consist of an elastomer. The compressing element 39 may be configured to transmit a force applied via the insert 31 to the retaining element 38b. As a consequence, the retaining element 38b may be deformed and provide a force locking mechanical connection with the shaft of the fluid line 51.

In an alternative embodiment, the compressing element 39 consists of a rigid material, such as a metal, a hard plastic, or a composite material, configured to substantially maintain its shape when the force is applied via the insert 31. In this case, the retaining element 38b and/or the compressing element 39 are preferably attached to the shaft of the fluid line 51 via a material bond.

In the depicted example, the fluid path 70 is provided when the flat seal 37 is separated from the end section 31b of the insert 31 or the compressing element 39, while the insert 31 is still mechanically engaged with the sleeve 33 via the coupling mechanism. As the vent openings 40 are provided within the end wall 34 of the sleeve 33, the pressurized fluid can escape from the coupling assembly 50 in an axial direction, directed away from a hand of an operator (not shown) in contact with a lateral surface of the sleeve 33 when unscrewing the insert 31 from the sleeve 33. However, it is also conceivable that at least one vent opening 40 is arranged in a lateral surface of the sleeve 33 according to an embodiment described above.

Fig. 8 depicts a further embodiment of the inventive coupling assembly 50. In the depicted example, the first part 53 of the coupling assembly 50 including the sleeve 33 and the second part 54 of the coupling assembly 50 including the insert 31 comprise complementary parts of a flange connection configured to mechanically connect the first part 53 to the second part 54. The coupling assembly 50 may comprise screws 41 configured to bring the first part 53 and the second part 54 together and to tighten the flange connection. The seal 37 may be a flat seal or gasket configured to be compressed between flange sections of the first part 53 and the second part 54 when the flange connection is tightened via the screws 41.

Preferably, the coupling assembly 50 comprises at least one of the two exemplary vent openings 40 illustrated in Fig. 8. The vent openings 40 may represent holes, particularly boreholes, running through a wall of the second part 54 and/or the insert 31. The vent openings 40 allow for a depressurization of a fluid within the coupling assembly 50, when the insert 31 is arranged within the sleeve 33 in a position between the opening 33a of the sleeve 33 and the end position. In the depicted example, a fluid path 70 from an inner volume 57 of the coupling assembly 50 to a surrounding 90 is provided when a gap between the flange section of the first part 53 and the flange section of the second part 54 exceeds a thickness of the seal 37.

In alternative embodiments, the coupling mechanism may comprise a clamp connection or a bayonet connection instead of a flange connection. The seal 37 may be arranged within a volume encompassed by the sleeve 33 as depicted in Fig. 1 or outside the sleeve 33 as depicted in Fig. 8.

Fig. 9 shows an embodiment of an inventive fluid line connection 80. Preferably, the inventive coupling assembly 50 is configured to connect a fluid line 51 to a fluid system 56. The fluid system 56 may correspond to a further fluid line. However, the fluid system 56 may also correspond to a pump, a compressor, or a fluid container. It is also conceivable that the fluid system 56 comprises one or more components, such as a pump, a compressor, a fluid container, and/or a further fluid line. The fluid system 56 may comprise a connecting piece 55 configured for mechanically connecting to an inventive insert 31 and/or an insert 31 of a coupling assembly 50 according to an embodiment described above (see Figs. 1 to 8). The insert 31 may be connected to the connecting piece 55 or the fluid system 56 via any suitable form-locking, force-locking, and/or material connection. According to an embodiment, the insert 31 may be reversibly or permanently connected to the fluid system 56 and/or the connecting piece 55.

As illustrated in Fig. 9, the coupling assembly 50 is configured to provide a fluid connection between the fluid system 56 or connecting piece 55 and the fluid line 51. The coupling assembly 50 may correspond to a coupling assembly 50 according to an embodiment described above. Preferably, the fluid line 51 is a vacuum insulated fluid line as shown in Fig. 4. Vacuum insulated fluid lines may be used for transporting cryogens or cryogenic fluids, such as helium, argon, neon, nitrogen, or the like, at cryogenic temperatures (e. g. temperatures below 150 K, below 100 K, below 50 K, or preferably below 10 K). For example, the fluid line 51 may be configured to transport a cryogen for a cryogenic application, such as cooling or pre-cooling a superconducting magnet and/or filling a cryogen vessel of a magnetic resonance device. The inventive coupling assembly 50 may favourably be used at room temperatures (and therefore allow for a use of a rubber seal 37), whilst the fluid being transferred is at a cryogenic temperature.

An inventive sleeve 33 may be configured in accordance with any of the sleeves 33 comprising a vent opening 40 described above.

The embodiments described herein are to be recognized as examples. It is to be understood that individual embodiments may be extended by or combined with features of other embodiments if not stated otherwise.

## Claims

1. Coupling assembly (50) for connecting fluid lines (51), including a first part (53) comprising a sleeve (33), a second part (54) comprising an insert (31), and at least one seal (37), wherein
· the sleeve (33) comprises an opening (33a) configured to accommodate the insert (31),
· the at least one seal (37) is arranged between the first part (53) and the second part (54) in such a way to provide a fluid-tight connection between the first part (53) and the second part (54) when the insert (31) is arranged in an end position within the sleeve (33), and
· the sleeve (33) and/or the insert (31) comprise at least one vent opening (40) configured to provide a fluid path (70) from an inner volume (57) of the coupling assembly (50) to a surrounding (90) when the insert (31) is arranged within the sleeve (33) in a position between the opening (33a) of the sleeve (33) and the end position.

2. Coupling assembly (50) according to claim 1, wherein the first part (53) and the second part (54) comprise complementary parts of a coupling mechanism configured to mechanically connect the first part (53) to the second part (54).

3. Coupling assembly (50) according to claim 2, wherein the coupling mechanism comprises a threaded connection, wherein the sleeve (33) comprises a female thread and the insert (31) comprises a male thread configured to mechanically engage with the female thread of the sleeve (33).

4. Coupling assembly (50) according to claim 3, wherein the insert (31) comprises a non-threaded section (61) arranged between a first threaded section (62a) and a second threaded section (62b), and wherein outer diameters of the first threaded section (62a) and the second threaded section (62b) exceed an outer diameter of the non-threaded section (61).

5. Coupling assembly (50) according to a preceding claim, comprising a retaining element (38b) and a compressing element (39), wherein the sleeve (33) comprises an end wall (34), wherein the retaining element (38b) is configured to circumferentially encompass a fluid line (51) along a section of a longitudinal axis of the fluid line (51) and wherein the compressing element (39) is configured to compress the retaining element (38b) between the end wall (34) and the compressing element (39) when the insert (31) is arranged in the end position within the sleeve (33).

6. Coupling assembly (50) according to claim 5, wherein a section of the compressing element (39) comprises the shape of cone, a frustrum, a hemisphere, a cylinder, or a prism.

7. Coupling assembly (50) according to one of the claims 5 or 6, wherein the compressing element (39) comprises a tapered section and wherein the insert (31) comprises a bore with an inner taper configured to accommodate the tapered section (39a) of the compressing element (39), wherein the at least one seal (37) is configured to be arranged between the compressing element (39) and the insert (31) in such a way to provide the fluid-tight connection between the first part (53) and the second part (54) when the insert (31) is arranged in the end position within the sleeve (33).

8. Coupling assembly (50) according to one of the preceding claims, wherein the at least one vent opening (40) is arranged in a lateral surface of the sleeve (33) and/or wherein the sleeve (33) comprises an end wall (34) and the at least one vent opening (40) is arranged in the end wall (34).

9. Coupling assembly (50) according to one of the preceding claims, wherein the at least one vent opening (40) is formed as a groove or channel in an outer surface of the insert (31).

10. Coupling assembly (50) according to one of the preceding claims, comprising a passage configured to accommodate a vacuum insulated fluid line (51) and allow for the vacuum insulated fluid line (51) to extend through the coupling assembly (50) along a longitudinal axis (52) of the coupling assembly (50).

11. Insert (31) for use in a coupling assembly (50) according to one of the preceding claims, comprising at least one vent opening (40) formed as groove or channel in an outer surface the insert (31).

12. Sleeve (33) for use in a coupling assembly (50) according to one of the claims 1 to 10, comprising an opening (33a) configured to accommodate an insert (31), and at least one vent opening (40) arranged in a wall of the sleeve (33).

13. Fluid line connection (80), comprising a coupling assembly (50) according to one of the claims 1 to 10, wherein the first part (53) is attached to a first fluid line and the second part is attached to a second fluid line,
wherein the insert (31) of the second part (54) is arranged in the end position within the sleeve (33) of the first part (53), and wherein the at least one seal (37) is arranged between the first part (53) and the second part (54) in such a way to provide a fluid-tight connection between the first part (53) and the second part (54).

14. Fluid line connection (80) according to claim 13, comprising a coupling assembly (50) according to one of the claims 5 to 7, wherein the retaining element (38b) is compressed between the end wall (34) of the sleeve (33) and the compressing element (39) and wherein the first fluid line is mechanically attached to the first part (53) via the retaining element (38).
